# EUROPEAN PATENT APPLICATION

(11) **EP 4 679 310 A1**
(43) Date of publication of application: **14.01.2026**
(21) Application number: 24188368.5
(22) Date of filing: 12.07.2024
(51) Int. Cl.: G06F 30/12, G06F 30/27, G06F 111/20

(54) **METHOD FOR OBTAINING A FORMAL MODEL OF AN INDUSTRIAL PLANT**

(71) Applicant: ABB SCHWEIZ AG, 5400 Baden (CH)
(72) Inventor: HOERNICKE, Mario, 76829 Landau (DE); ROSSE, Jerome, 3007 Bern (CH); SCHOCH, Nicolai, 69120 Heidelberg (DE)
(74) Representative: Maiwald GmbH

(57) **Abstract**

The disclosure relates to a method (100) for obtaining a formal model (10) of an industrial plant, the method comprising:
- obtaining intention data for an industrial plant;
- obtaining instruction data comprising one or more instructions for processing the intention data by an AI processing component (44) to obtain a current formal model (10i) of the intention data;
- providing the current formal (10i) model to the AI processing component (44) to compare to a previous formal model (10ii) stored in a database;
- generating the formal model (10) by the AI processing component (44) based on the comparison of the previous formal (10ii) model and the current formal model (10i).

## Description

### TECHNICAL FIELD

The present invention relates to a method for obtaining a formal model of an industrial plant, the method comprising: obtaining intention data for an industrial plant; obtaining instruction data comprising one or more instructions for processing the intention data by an AI processing component to obtain a current formal model of the intention data; providing the current formal model to the AI processing component to compare to a previous formal model stored in a database; generating the formal model by the AI processing component based on the comparison of the previous formal model and the current formal model.

### BACKGROUND

In the field of industrial plant engineering, creating a detailed and accurate formal model of an industrial plant is an important step in the design and implementation process. This formal model serves as a comprehensive representation of the plant, including its process flows, control logic, equipment specifications, and other critical components. Traditionally, engineers rely on a variety of input data sources, such as piping and instrumentation diagrams (P&IDs), functional descriptions, equipment lists, and process specifications, to develop these models.

However, these inputs are often provided in unstructured formats, making it challenging to integrate and utilize them efficiently. The manual process of sifting through these documents to extract relevant information is time-consuming, error-prone, and heavily dependent on the expertise of the engineers. As a result, creating a formal model that accurately captures all aspects of an industrial plant is a complex and labor-intensive task.

Industrial plants are intricate systems comprising numerous components and processes that must work harmoniously to ensure optimal performance. Engineers must meticulously define and model each aspect of the plant, including material flows, control sequences, safety interlocks, and equipment interactions. The accuracy of these models is paramount, as any errors or omissions can lead to significant issues during construction, commissioning, and operation.

A common practice in industrial plant engineering is the reuse of parts of existing solutions when designing new plants. Engineers often copy and adapt sections from previous projects to save time and leverage proven designs. While this approach can be efficient, it heavily depends on the engineer's knowledge and ability to manually identify and extract relevant components and processes from past projects. Given the unstructured nature of the initial input data, finding and adapting these components can be a tedious, error-prone, and inconsistent process.

Moreover, the lack of standardized methods for comparing and reusing previous models further complicates the process. Engineers may miss potential opportunities to reuse existing modules due to differences in terminology or variations in how similar components are described across different projects. This inconsistency not only increases the effort required to develop new models but also reduces the reliability and consistency of the final design.

### SUMMARY

The above problem or need is at least partially solved or alleviated by the subject matters of the independent claims of the present disclosure, wherein further examples are incorporated in the dependent claims.

According to an aspect of the present disclosure, there is provided a method for obtaining a formal model of an industrial plant, the method comprising:
- obtaining intention data for an industrial plant;
- obtaining instruction data comprising one or more instructions for processing the intention data by an AI processing component to obtain a current formal model of the intention data;
- providing the current formal model to the AI processing component to compare to a previous formal model stored in a database;
- generating the formal model by the AI processing component based on the comparison of the previous formal model and the current formal model.

A formal model in the context of industrial plant engineering may relate to an industrial plant model. It may be a comprehensive representation of various aspects of the plant, e.g. structured in a way that facilitates analysis, simulation, and implementation. This formal model may include detailed descriptions of process flows, control logic, and equipment specifications. It may encompass modular components, equipment functionalities, requirements (or formal requirement specifications), inputs and outputs (such as raw materials, products, signals, and energy flows), services, and tags. Formal models may also enable simulations and validations to be conducted, verifying the functionality and efficiency of the planned plant before its actual implementation, for example. They may be provided e.g. in a visual representation of the plant. The formal model may encompass a wide range of structured, hierarchical, graph-based, geometric, tabular, simulation, documentation, and control logic elements, for example.

"Intention data" may refer to a collection of information and specifications that capture the desired outcomes, requirements, and functionalities for an industrial plant project. Intention data are often unstructured and come in various formats, making it challenging to integrate and use them efficiently. Intention data may be collected from various sources and integrated into a comprehensive dataset. This data may come from customer specifications, engineering documents, or historical project data.

The intention data may comprise one or more instructions for processing the intention data by an AI processing component to obtain a current formal model of the intention data. This may mean that instruction data may be specific pieces of information or context information that contain directives on how the intention data should be processed. These instructions may e.g. ensure that raw data are correctly and efficiently transformed into a structured, formal model. For example, the instruction data may act as a guide for the processing component, dictating the methods and rules to be applied in converting the intention data into a structured or formal model form. The instruction data may comprise commands that instruct the AI processing component on how to analyze and structure the intention data. The instruction data may for example comprise one or more instructions in the form of a prompt or, in other words, a query. These could be specific algorithms or procedures that need to be applied during data processing. Rules and guidelines may be provided to specify how certain types of data should be handled. For example, there might be rules for interpreting P&IDs, assigning tags and labels, or managing equipment and component lists, or similar. The instruction data may also include protocols that define the sequence of data processing steps. This may include the order of operations, the application of specific filters, or the aggregation of data. The AI processing component may process the intention data using the instruction data. This AI processing component may be a software application, an AI algorithm, or a specialized processing system, for example. The AI processing component may e.g. analyze the intention data according to the received instructions. This may involve identifying and extracting relevant information, cleaning the data, and converting unstructured data into a structured format. Based on the instruction data, the AI processing component may generate a current formal model of the intention data. This model may be a detailed and structured representation of the industrial plant, serving as the foundation for further planning and implementation, for example. The use of specific instruction data may ensure that intention data are systematically and accurately processed to produce a reliable and consistent model, which serves as the foundation for planning, simulating, and implementing the plant, for example. The AI processing component may be an AI/ML component that include natural language processing (NLP) models that are specially trained to analyze technical documentation and specifications semantically. One example of this may be the use of a generative pre-trained transformer model (GPT), which was trained on an extensive data set of technical documents. This model may be able to analyze unstructured data as the intention data, extract relevant information, and identify semantic similarities between different intentions and functional components. Other AI/ML models, such as Convolutional Neural Networks (CNNs) and Recurrent Neural Networks (RNNs), may be used for pattern recognition and time series analysis. These models may be continuously trained and optimized with new intention data in order to improve their accuracy and efficiency.

The current formal model may be provided to the AI processing component to compare to a previous formal model stored in a database. AI processing components may be sophisticated systems or algorithms that utilize artificial intelligence to perform complex analyses. In this step, these AI processing components may conduct a thorough comparison between the newly generated current formal model and the stored previous formal models. The AI processing components may be responsible for taking the current formal model, which has been generated based on the processed intention data and instruction data and preparing it for comparison. This may involve ensuring that the formal model is in a compatible format and that all relevant data points are included for an accurate comparison. The AI processing components then compare the current formal model with previous formal models stored in a database. This comparison can involve several methods, such as pattern recognition, similarity analysis, differential analysis, or similar. By comparing the current formal model with previous formal models, the AI processing components may identify reusable components and configurations. This may reduce the need to design elements from scratch, saving time and resources. The comparison may further help ensure that the current formal model adheres to established standards and best practices derived from previous projects. Differences identified during the comparison may e.g. highlight potential errors or areas that need further refinement. This proactive detection of errors may prevent problems during the later stages of implementation. The formal model may be generated by the AI processing component based on the comparison of the previous formal model and the current formal model. The results of the comparison may be analyzed by the AI processing component to decide which elements of the previous models should be incorporated, adjusted, or discarded, for example. This may include e.g. selecting components, control logics, process flows, or similar to be used in the formal model. Based on the comparison results, the AI processing components may generate the formal model. This process may involve a.o., incorporating proven components and processes from previous models, adjusting the incorporated elements to meet specific requirements of the current project, and implementing optimizations and improvements identified during the comparison. Thus, by using AI processing components to analyze and integrate proven solutions from previous projects, the modeling process may be significantly enhanced, leading to more efficient, accurate, and high-quality formal models. The method may be carried out by one or more AI processing components.

The present invention may be applied in various industrial plant design and implementation scenarios. An example may be the design of a new chemical plant where customer requirements are available in the form of Piping and Instrumentation Diagrams (P&IDs) and functional descriptions. By applying the described AI/ML components, a formal model of the plant may be created that identifies the existing modules and components that can be reused, for example. By applying the methods described, new production lines may be set up more quickly and resource-saving by reusing and adapting proven modules and processes.

The method of the first aspect may in particular be an at least partially or fully computer implemented method. This means that at least one, multiple, or all of the steps of the method may be carried out by a data processing system, which may comprise one or more data processing apparatuses, which may be in the form of computers or computing units, which may comprise one or more processors and data storages or memories. Different steps may be carried out by the same or by different data processing apparatuses of the data processing system.

In an example, the intention data is obtained through natural language processing (NLP). Intention data is often provided in unstructured formats, such as textual documents. Processing and integrating this unstructured data may be challenging. By applying NLP, the system may e.g. identify and extract key pieces of information such as equipment specifications, process parameters, control sequences, and safety requirements. This extraction process may convert intention data as unstructured text into a structured format, making it usable for generating a formal model. For example, NLP algorithms may analyze the unstructured textual data to understand the context and content. This may involve e.g. parsing the text to identify relevant sections and terms. Key information may be extracted from the text, such as specific values, operational conditions, and component details. For example, the NLP system may identify that "pressure" in one context refers to a process parameter while in another it indicates a safety threshold. NLP processing may understand semantic meaning of the text, e.g. by fuzzy matching. Fuzzy matching may find matches that are not exact but are close enough based on their semantic meaning. For example, the words "metal heating" and "metal burning" may be matched because the functions are similar despite the different terminology. This may allow the system to capture variations in language and terminology that might otherwise be missed. In order to achieve this semantic meaning comparison, all contents/things/relations/attributes can be transformed into an embedding space, so that they are represented as numerical vectors. To achieve semantic comparison, all contents, relations, and attributes may be transformed into an embedding space, where they are represented e.g. as numerical vectors. These embedding vectors may capture the semantic meanings of the content, enabling more flexible and nuanced comparisons. An NLP algorithm may then perform fuzzy comparisons using these embedding vectors. By comparing the vectors rather than just the names, the system may recognize similar meanings even with slight variations, ensuring that functionally equivalent but differently named components are correctly matched. By using semantic analysis the context and roles of entities and relationships may be understood properly. This may e.g. ensure that the extracted information accurately reflects the functional and operational aspects of the plant. Further, the intention data may be converted into a graph-based format by the NLP algorithm. In this graph, nodes represent the entities (e.g., equipment, parameters) and edges represent the relationships (e.g., connections, dependencies).

In an example, the formal model may comprise one of a structured and/or hierarchical and/or graph-based format. A structured format may organize data in a defined schema or structure, using formats like XML (Extensible Markup Language) or AutomationML (Automation Markup Language). This format may allow for parsing, validation, and manipulation of data by computer systems. A hierarchical format may represent data in a tree-like structure, where elements have parent-child relationships. This format may be useful for representing e.g. nested or dependent components, such as a main plant system with various subsystems and components. A graph-based format may e.g. represent data as nodes (entities) and edges (relationships). This format may be flexible and can efficiently model complex interdependencies and interactions between components. Graph-based formats like RDF/OWL (Resource Description Framework/Web Ontology Language) may be used for their ability to represent semantic relationships. Organizing the formal model in a structured and/or hierarchical and/or graph-based format, may ensure that the formal model generated by the method is in a format that is organized, interpretable, and compatible with other systems, for example. For example, various types of intention data may be collected and processed. Following, the processed intention data may be organized e.g. into a structured, hierarchical, or graph-based format depending on the requirements of a project and the complexity of the intention data. Further, components and their relationships may be accurately represented in a chosen format. Structured intention data formats may provide e.g. a clear schema, hierarchical formats may e.g. depict parent-child dependencies, and graph-based formats may e.g. capture complex interdependencies. The formal model may be validated against predefined criteria to ensure it accurately represents the industrial plant, for example and e.g. make necessary refinements to improve the model's accuracy and usability. By specifying these formats, the method may ensure that the formal model may be represented in a structured, hierarchical, or graph-based format, providing flexibility and adaptability to different data types and project requirements, for example. The formal model may additionally combine structured, object-oriented, and relational formats, which may enhance data interoperability, allowing different systems and tools to work seamlessly together. Other formats could comprise semantic web and matrix formats, which may improve the ability to perform complex reasoning and network analysis, providing deeper insights into the industrial plant's operations. Another example may be e.g. geospatial formats add the dimension of physical space, which may be beneficial for planning and optimizing plant layouts. The formal model may have any suitable format, such as but not limiting XML, AutomationML, or RDF/OWL.

In an example, the AI processing component may perform symbolic and/or semantic comparison. Symbolic comparison may e.g. involve matching exact terms, identifiers, or symbols used in the current formal model or the previous formal model respectively. For instance, symbolic comparison may directly match specific identifiers or codes such as "P-101" for a pump or "T-202" for a tank. These identifiers may be used consistently within documentation and models, allowing the AI processing components to recognize and map them. On the other hand, semantic comparison may go beyond literal term matching to understand the underlying meaning of the formal model. This may involve using NLP techniques to interpret the context and semantics of the terms used in the formal model. For example, if the current formal model describes a component as a "heat exchanger" and the previous models use the term "thermal exchange unit," the AI processing component may recognize that these terms refer to the same type of equipment. Symbolic and semantic comparisons may be combined to enhance the robustness and accuracy of the AI processing component. By leveraging both, symbolic and semantic comparisons, the system may ensure that all relevant matches are identified, whether they are exact symbolic matches or contextually similar semantic matches.

In an example, the AI processing components may use graph algorithms to identify similarities between the current formal model and the previous formal models. The current and previous formal models may be represented as graphs. In these graphs, nodes may represent entities such as equipment, processes, subsystems, or similar, while edges may represent the relationships or interactions between these entities. This representation may allow for a detailed and intuitive depiction of the plant's structure and operations. Graph algorithms may be computational techniques designed to analyze and traverse graph structures. These algorithms may identify e.g. patterns, detect subgraph isomorphisms (i.e., matching substructures), and evaluate the similarity between different graph representations. These algorithms may detect subgraphs within a larger graph, enabling the identification of reusable components and configurations. For instance, if the formal model of a new plant includes a specific arrangement of pumps, valves, and heat exchangers, the subgraph matching algorithm can search the database of existing modules to find a matching or similar configuration. This process may significantly reduce the need for designing new components from scratch. By using graph algorithms, the AI processing components may efficiently compare the current formal model with previous models to find similarities and differences. For example, NLP may be used to process intention data from unstructured text or similar and convert it into a structured graph-based format or formal model respectively. Both, the current formal model and previous formal models may be constructed as graphs. This may involve representing each entity (e.g., reactors, pumps, heat exchangers) as nodes and their interactions or relationships (e.g., connections, dependencies) as edges, for example. The AI processing components may apply graph-matching algorithms to compare the current formal model's graph with the graphs of previous formal model. These algorithms may e.g. search for subgraph isomorphisms, where a subgraph of one graph is structurally identical to a subgraph of another graph. The AI processing components may measure the similarity between the graphs based on various metrics, such as the number of matched nodes and edges, the structural alignment, and the functional equivalence of the components. Graph algorithms may also identify recurring patterns or motifs within the graphs. These patterns may represent common configurations or standard practices in industrial plant design, which can be reused or adapted in the current formal model.

The graph algorithms may be integrated with AI/ML components, such as Natural Language Processing (NLP) models, to provide a comprehensive analysis. While graph algorithms focus on structural and topological similarities, AI/ML models enhance the analysis by considering semantic similarities and contextual relevance. This combined approach may leverage the strengths of both techniques, ensuring a thorough and reliable identification process.

The method may be carried out by one or more AI processing components. For instance, one AI processing component might perform natural language processing, another might handle semantic comparison, and a third could utilize graph algorithms. These AI processing components could either be distinct AI models or instances of the same AI model specialized for different tasks.

In an example, the instruction data may be configured for standardizing the intention data into a standardized format of the formal model. For example, various forms of intention data may be collected, such as but not limiting, P&IDs, functional descriptions, equipment lists, process specifications, interlocks and safety requirements, IO lists, tags and labels, services, utilities, control logic, and operational data. The instruction data may e.g. comprise specific rules and guidelines designed to standardize the intention data. This may include templates, schemas, or ontologies that define how the data should be formatted and represented, for example. The AI processing components may use the instruction data to transform the intention data into a standardized format. This may involve e.g. parsing and structuring the data according to the predefined templates or schemas, or ensuring that all entities and relationships are consistently represented, or converting various terminologies and units into a common format, or similar. The standardized intention data may be used to generate the formal model, ensuring that it follows the same structure and format as defined by the instruction data. This standardized formal model may then be used for further analysis, comparison, and integration with the previous formal model, for example.

In an example, the generated formal model may be stored in a database for future comparison. The stored formal models may be retrieved and compared with new formal models in future projects. This may enable the AI processing components to leverage historical data to identify similarities, differences, and best practices, for example. The AI processing components may e.g. query the database to find relevant past models based on specific criteria, such as component types, configurations, or operational parameters. The database may serve e.g. as a repository of best practices and proven configurations, which may be referenced and reused in future projects to ensure consistent quality and reliability. Further, the stored formal models may facilitate comparative analysis, allowing for quick identifying similarities and differences between current and existing formal models, leading to more efficient design and integration processes. The accumulated formal models in the database may further support Al-based enhancements, enabling the development of advanced algorithms for model comparison, optimization, and predictive analysis, for example. The database for storing the formal models may be a relational database, NoSQL database, graph database, document database, time-series database, a cloud storage solution, or similar. The main value of this approach may lie in the ability to learn from the past and reuse proven formal models. This may save time and resources as engineers do not have to start from scratch each time.

In an example, the intention data may be at least in the form of one or more of text data, image data, and/or measurement data. This may mean that the image data may relate at least to one or more of: project-specific documentation and specifications, including P&IDs, functional descriptions, equipment lists, process specifications, interlocks and safety requirements, IO lists, tags, and labels, services, utilities, control logic, and operational data, for example. For example, intention data may include e.g. textual documents that describe the functions and operations of the plant systems, which provide a narrative of how various systems and components within the industrial plant should operate, outlining the intended functions, control logic, and sequences of operations for different parts of the plant. This may serve as a blueprint for understanding the overall functionality and behavior of the plant. Intention data may for example also be in a Piping and Instrumentation Diagram (P&ID) form, showing interconnections between different equipment, piping, and instrumentation in the plant. P&IDs may illustrate the flow of materials and control signals, and specify the types and locations of valves, sensors, controllers, and other instrumentation. Intention data may further comprise control logic, operational and performance data, or similar.

In an example, the Al processing components may be generative Al processing components based on at least one Large Language Model (LLM). The generative Al processing components may be implemented in or provided as software and executed on the same data processing apparatus as the one which may be executing the method of the first aspect or on a different one or several different ones, for example. For example, the Al processing components may be executed on distant or remote servers, which may have increased data processing capabilities and storages for storing one or more LLMs. Alternatively, these may be locally stored and executed. The generative Al processing components may be trained with or based on any LLM, e.g., general LLM and/or LLM specific for intention data and/or formal models. Hence, the generative Al processing components may be any generative Al processing component such as provided by OpenAI, Microsoft, Google, and others, e.g., ChatGPT, Google Gemini or Bard, and similar. Or, alternatively, the generative Al processing components may be trained with or based on open-source LLMs, for example. The generative Al processing component may advantageously process all content of the intention data and/or formal models provided as or interpretable as or convertable to natural language, for example.

In an example, the comparison between the current formal model and the previous formal model may also include classification of the models. The Al processing component may generate the current formal model based on the intention data and the standardized formats defined by the instruction data. Previous formal models may be stored in the database are retrieved for comparison with the current formal model. The models may be classified based on predefined criteria such as: type of process (Distillation, filtration, chemical reaction, etc.), equipment used (types and specifications of equipment involved), operational parameters (temperature, pressure, flow rates, etc.), safety and compliance (safety interlocks, regulatory compliance), performance metrics (efficiency, yield, downtime, etc.). The AI processing component may compare the current formal model with previous formal models, identifying similarities and differences. During this comparison, the formal models may also be classified according to the established criteria. Classification tags or labels may be assigned to each formal model based on its characteristics. Classification of the formal models may e.g. facilitate a more organized and efficient analysis by allowing the AI processing components to quickly identify and group similar models.

In an example, the generated formal model is ranked according to its correspondence with the current formal model. The AI processing component may compare the current formal model with the previous model, identifying the degree of correspondence in terms of structure, specifications, and functional roles, for example. Metrics such as but not limited to structural similarity, specification match, functional equivalence, or similar may be used to quantify the degree of correspondence between the current formal model and previous models. Based on the correspondence metrics, the previous models may then be ranked. The ranking may indicate which models have the highest correspondence with the current formal model. The AI processing component may generate a ranked list, where the top models have the highest correspondence with the current formal model, for example. This ranking process may help e.g. prioritize the most relevant formal models, facilitating efficient selection and integration.

In an example, the generated formal model may be presented in a digital representation, indicating at least which parts of the formal model is covered, missing, or redundant. To facilitate a clear understanding of the differences, a detailed visual representation may be provided. These visualizations may include diagrams and "Diff" structures, similar to those used in Git repositories. By highlighting the differences in a visual format, a user may quickly identify areas that require modification or adaptation, for example. In addition to diagrams "Diff' structures may be employed to show textual differences. Similar to version control systems like Git, these structures provide a line-by-line comparison, making it easy to see what has been added, removed, or altered. This is particularly useful for detailed specifications and control logic, where precise adjustments are necessary. For example, covered parts may be elements or components that match or align with the existing or previous formal models, missing parts may be elements required but not present, and redundant parts may be elements that are unnecessary or duplicated. The results of the comparison and analysis may be presented using various visualization techniques to create an intuitive and user-friendly digital representation. For example, visual indicators such as color-coding and markers, or similar, may be used to highlight the status of each part of the formal model. Interactive elements may be incorporated into the digital representation to allow e.g. a user to click on or hover over different parts of the model for more detailed information. Detailed annotations and comments may be included in the digital representation of the formal model to provide context and explanations for each identified part.

In an example, the AI processing components may automatically update or complete the formal models. The AI processing component may generate recommendations for improving and/or adapting the current formal model, for example. These recommendations may include such as but not limited to, adding missing components or specifications, removing redundant or unnecessary elements, modifying existing components, and enhancing safety and compliance features based on insights from previous formal models. The AI processing components may be able to update or complete the formal model based on the recommendations. The recommendations may further be presented in a user-friendly format, such as a report or an interactive dashboard. Therefore, a user may be provided with options / recommendations about which (previous) formal model representations are similar and could be composed, or even how to compose the found intentions into the overall intention. After making the updates, the AI processing components may validate and verify the updated formal model to ensure accuracy and consistency. This step may ensure that the formal model meets all required standards and specifications. The updated formal model may be stored in the database for future reference and comparison, for example. The updated formal model may then be ready for use in the design and implementation process of the industrial plant, for example.

According to a second aspect of this disclosure, there are provided one or more computer program products comprising instructions which, when executed by one or more data processing apparatuses, cause the one or more data processing apparatuses to carry out the method of the first aspect of this disclosure.

The computer program product(s) may be a computer program or computer programs as such, meaning a computer program consisting of or comprising program code to be executed by the data processing apparatus, in particular computer.

Alternatively, the computer program product(s) may be a product or products such as a data storage(s), in particular computer-readable data storage medium(s), on which the computer program(s) may be temporarily or permanently stored.

According to a third aspect of this disclosure, there is provided a data processing system configured to carry out the method according to the first aspect of this disclosure.

It is noted that the above aspects, examples, and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a data processing system;
Figure 2 shows a computer program with its elements;
Figure 3 shows a method for obtaining a formal model of an industrial plant; and
Figure 4 shows a digital representation in the form of a graph of a formal model.

The Figures are schematic only and not true to scale. In principle, identical or like parts, elements and/or steps are provided with identical or like reference numerals in the Figures.

### DETAILED DESCRIPTION OF THE INVENTION

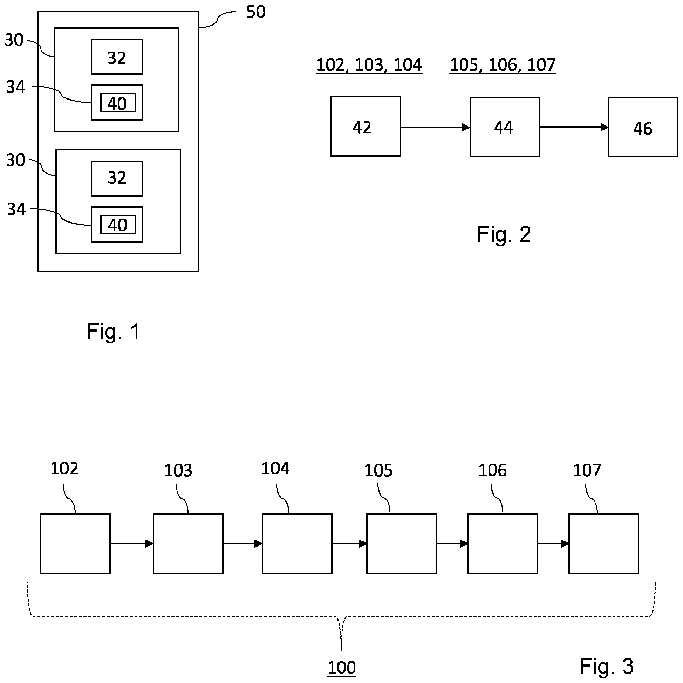

Figure 1 schematically shows a data processing system 50, which may comprise one or more data processing apparatuses 30, e.g., computers, two of which are shown for the purpose of example. The data processing system 50, in particular one or both of the data processing apparatuses 30, in particular their processors 32, may be used to carry out the method 100 for obtaining a formal model of an industrial plant schematically illustrated in

Fig. 3. Each one of the exemplary two data processing apparatuses 30 comprises at least one processing unit or processor 32, e.g., a CPU, and at least one computer program product 34, e.g., in the form of a computer-readable storage medium. Computer programs 40 are stored on the computer program products 34.

Figure 2 schematically shows one or more computer elements 42, 44, 46 of the computer programs 40 in the data processing system 50, which may form parts of the computer programs 40, e.g., different program code for different functions or steps of the method 100. Specifically, a computer program 40 of one of the data processing apparatuses 30 may be comprising the computer elements 42, and 46, which may be in the form of software codes or instructions for the processors 32. The other computer program 40 of the other data processing apparatus 30 in the data processing system 50 may comprise the computer elements 44. The data processing system 50 may be a distributed computing environment, where, for example, the computer elements 42, 46 are executed on a local user data processing apparatus 30, such as any stationary or mobile computer, and the computer elements 44 may be executed by a remote or server type of data processing apparatus 30, having increased processing capabilities for processing of the computer elements 44. Alternatively, the computer elements 42, 44, 46 may be all provided as part of the same computer program 40 or executed by the same data processing apparatus 30.

For obtaining the formal model, method 100 may comprise a step 102, in which the intention data is obtained, in particular by the data processing apparatus 30 executing the computer element 42. The intention data may be directly transmitted by data processing system 20, for example, or via a storage medium, another data processing apparatus 30, based on user input, and similar, for example.

Further, in a step 104 of method 100, which may be after step 102 as shown or, alternatively, parallel or before, instruction data comprising one or more instructions for processing the intention data by the computer element 44, which may be the AI processing component 44, e.g. an Al-based data processing funnel or NLP, may be used to process the unstructured data and convert it into a structured format, for obtaining the formal model 10.

Both, the intention data and the instruction data, may be obtained by or provided to the computer element 42. The computer element 42 may be a dispatching element for dispatching or providing, the intention data to the AI processing component 44. The computer element 42 may be responsible to send the request based on the instruction data with the intention data to the AI processing component 44. The computer elements 44 may be executed on the same data processing apparatus 30 as the one executing the computer element 42 or a different one, as explained herein.

In a step 105 of method 100, after obtaining the intention data and the instruction data, the data processing apparatus 30 that previously executed the steps 102 and 104, may dispatch or provide the intention data and the instruction data for processing by the AI processing component 44. One or more AI processing components 44 may process the intention data and the instruction data separately.

The instruction data may for example comprise one or more instructions in the form of a prompt or, in other words, query. The prompt may be configured such that it instructs the AI processing components 44 to generate the formal model 10. A structured data format may be used to create the formal model of the unstructured intention data, represented e.g. as a graph or hierarchical format.

In a step 106 of method 100, the generated graph representing a current formal model 10i may be compared with predefined or previous formal models 10ii stored in a database or cloud storage using graph similarity algorithms, for example. For example, the AI processing component 44 may search for patterns in the graph of the current formal model 10i that match the graphs of predefined or previous formal models 10ii. Another AI processing component 44, e.g. AI/ML models, particularly those utilizing NLP techniques, may compare semantic content of the graphs. This may involve transforming nodes, edges, and their attributes into numerical vectors (embeddings) and comparing these embeddings for semantic similarities. Suitable formal models may be identified and ranked based on their degree of overlap and semantic similarity with the current formal model 10i.

Then, in step 107 of method 100, based on the analysis and comparison, the formal model may be generated by the AI processing component 44. The generation of the formal model 10 may take place as part of the process flow within the AI processing component 44, for example. Based on the generated formal model 10, recommendations for improving and/or adapting the formal model 10 may be provided. These may include adding missing components 12, removing redundant components 12, and modifying existing components 12, for example. The differences between the current formal model 10i and the recommended formal model 10 may be visualized, showing covered, missing, and redundant components 12. For this purpose, a computer element 46 may be used, which may be in the form of a visualization component 12.

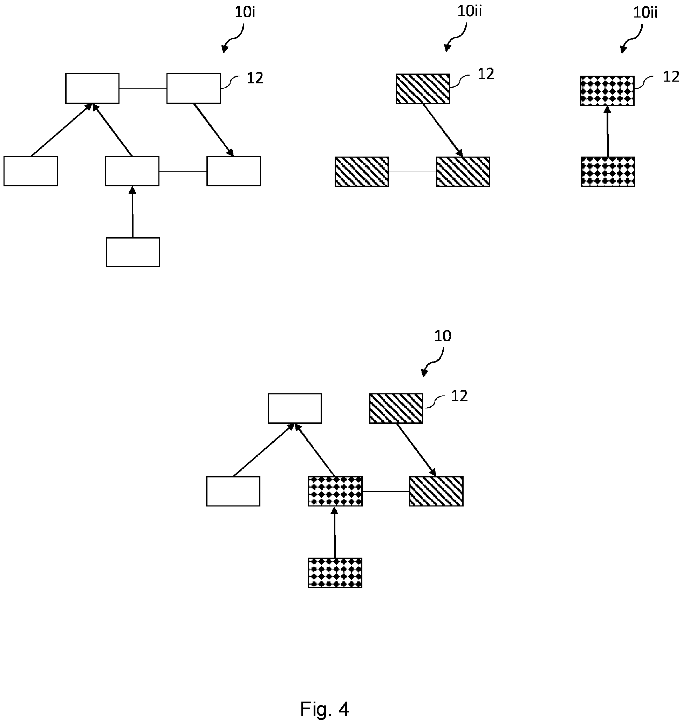

Figure 4 illustrates the concept of obtaining a formal model 10 within the context of industrial plant engineering, specifically how a previous formal model 10ii can fulfill different parts of the overall formal model 10 of the plant. The formal model 10 of the plant is represented by a graph comprising multiple nodes and edges. Each node may represent a specific intention or requirement within the plant, such as modular components or components 12, processes, or functionalities, or similar. The edges may represent the relationships or dependencies between these intentions, illustrating how different components 12 and processes interact. A current formal model 10i of intention data may be generated by an AI processing component 44 based on instruction data. The current intention model 10i may be compared to other existing or previous formal models 10ii using graph data processing algorithms, for example. The AI processing component 44 using graph data processing algorithms may e.g. identify sub-graphs and similarities between the current formal model 10i graph and the graphs of existing or previous formal models 10ii. Alternatively, or additionally, a AI/ML model may be used to compare the current formal model 10i to other existing or previous formal models 10ii. For example, NLP methods may compare the current formal model 10i content with sub-parts or individual pieces of the content, such as components 12 or services. The underlying semantic meaning of a component 12, such as a "sedimentation" functionality, may be matched with a "separation" functionality in another component 12, even if they have different names. Contents, relations, and attributes may be transformed into numerical vectors (embeddings) to allow fuzzy comparison using their respective embeddings. This approach can identify semantically similar components 12 that graph algorithms might miss, for example.

In this example, two relevant previous formal models 10ii were determined by the AI processing component 44 for the formal model 10. The AI processing component 44 may identifiy overlapping intentions or functionalities between the current formal model 10i and the two previous formal models 10ii (indicated by hatchings). This overlap indicates components 12 or processes that are common across the formal models 10. The AI processing component 44 may mark these overlaps to highlight areas where existing components 12 or modules can be reused (indicated by hatchings). Based on the degree of overlap and similarity, the AI processing component 44 may rank the relevant previous formal models 10ii. The combined graph shows the integration of nodes from both previous formal models 10ii, representing the selected components 12 or models that match the current model's 10i requirements. The AI processing component 44 may generate an updated formal model 10 for the plant by integrating the selected components 12 from the previous formal models 10ii. This updated formal model 10 may include all necessary components 12 nodes and edges, ensuring that all requirements and functionalities are covered. The AI processing component 44 may provide a visual representation of the differences between the current formal model 10i and the previous formal model 10ii. This visualization may highlight covered components 12, missing components 12, and redundant components, for example. Recommendations may be generated for a user, suggesting specific components 12 or modules to use and any necessary adaptations.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods and steps as first, second, etc. as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In the context of the present invention any numerical value indicated is typically associated with an interval of accuracy that the person skilled in the art will understand to still ensure the technical effect of the feature in question. As used herein, the deviation from the indicated numerical value is in the range of ± 10%, and preferably of ± 5%. The aforementioned deviation from the indicated numerical interval of ± 10%, and preferably of ± 5% is also indicated by the terms "about" and "approximately" used herein with respect to a numerical value.

Any reference signs in the claims should not be construed as limiting the scope.

## Claims

1. A method (100)for obtaining a formal model (10) of an industrial plant, the method comprising:
- obtaining intention data for an industrial plant;
- obtaining instruction data comprising one or more instructions for processing the intention data by an AI processing component (44) to obtain a current formal model (10i) of the intention data;
- providing the current formal (10i) model to the AI processing component (44) to compare to a previous formal model (10ii) stored in a database;
- generating the formal model (10) by the AI processing component (44) based on the comparison of the previous formal (10ii) model and the current formal model (10i).

2. The method (100) of claim 1, wherein the intention data is obtained through natural language processing.

3. The method (100) of claim 1 or 2, wherein the formal model (10) comprises one of a structured and/or hierarchical and/or graph-based format.

4. The method (100) of any of the preceding claims, wherein the AI processing component (44) performing symbolic and/or semantic comparison to identify similarities between the current formal model (10i) and the previous formal model (10ii).

5. The method (100) of any of the preceding claims, wherein the AI processing component (44) use graph algorithms to identify similarities between the current formal model (10i) and the previous formal model (10ii).

6. The method (100) of any one of the previous claims, wherein the instruction data is configured for standardizing the intention data into a standardized format of the current formal model (10i).

7. The method (100) of any of the preceding claims, wherein the formal model (10) is stored in a database for future comparison.

8. The method (100) of any of the preceding claims, wherein the intention data is at least in the form of one or more of text data, image data, and/or measurement data.

9. The method (100) of any one of the previous claims, wherein the AI processing component (44) is a generative AI processing component based on a Large Language Model.

10. The method (100) of any of the preceding claims, wherein the comparison between the current formal model (10i) and the previous formal model (10ii) also include a classification of the formal models (10i, 10ii).

11. The method (100) of any of the preceding claims, wherein the formal model (10) is ranked, by the AI processing component (44), according to its correspondence with the current formal model (10i).

12. The method (100) of any of the preceding claims, wherein the formal model (10) is presented in a digital representation, indicating which parts of the formal model (10) is covered, missing, or redundant.

13. The method (100) of any of the preceding claims, wherein the AI processing component (44) automatically updates or completes the formal model (10).

14. One or more computer program products (34, 40) comprising instructions which, when executed by one or more data processing apparatuses (30), cause the one or more data processing apparatuses (30) to carry out the method (100) of any one of the previous claims.

15. A data processing system (50) configured to carry out the method (100) of any one of claims 1 to 13.
